Europäisches Patentamt

European Patent Office

Office européen des brevets

(19)

(11) Numéro de publication : **0 239 455 B1**

(12) **FASCICULE DE BREVET EUROPEEN**

(45) Date de publication du fascicule du brevet :
27.02.91 Bulletin 91/09

(51) Int. Cl.⁵ : **H04M 1/66**

(21) Numéro de dépôt : **87400500.2**

(22) Date de dépôt : **06.03.87**

(54) **Dispositif antiviol de ligne téléphonique.**

(30) Priorité : 07.03.86 FR 8603238

(43) Date de publication de la demande :
30.09.87 Bulletin 87/40

(45) Mention de la délivrance du brevet :
27.02.91 Bulletin 91/09

(84) Etats contractants désignés :
BE CH DE ES FR GB IT LI

(56) Documents cités :
EP-A- 0 126 496
DE-A- 3 312 625
PATENT ABSTRACTS OF JAPAN, vol. 7, no.
158 (E-186)[1303], 12 juillet 1983; & JP-A-58 68
331

(73) Titulaire : ETAT FRANCAIS représenté par le
Ministre des PTT (Centre National d'Etudes
des Télécommunications)
38-40 rue du Général Leclerc
F-92131 Issy-les-Moulineaux (FR)

(72) Inventeur : Centomo, Jean-Louis
Ctron de Destrellan Nord B.P. 452
F-97110 Pointe à Pître (FR)
Inventeur : Morvan, Georges
Ten Ar Croissant Ploubezre
F-22300 Lannion (FR)
Inventeur : Moullec, Jean-Yves
7 Impasse Marc'Harid Fulup
F-22300 Lannion (FR)

(74) Mandataire : Mongrédien, André et al
c/o BREVATOME 25, rue de Ponthieu
F-75008 Paris (FR)

**Description**

La présente invention a pour objet un dispositif antiviol de ligne téléphonique.

Le réseau téléphonique est conçu de telle manière que soit limité au maximum le nombre d'opérations imposées à l'abonné qui veut téléphoner : dès que celui-ci décroche son combiné, il obtient un signal de tonalité et il lui suffit de composer le numéro demandé. Mais cette simplicité a un revers : il est aisé de brancher un poste téléphonique sur une ligne, en un point situé entre le poste d'abonné et le central téléphonique correspondant, et de téléphoner à sa guise à l'aide de ce poste, le coût des communications étant alors imputé à l'abonné.

La présente invention propose un dispositif qui permet d'éviter, dans la presque totalité des cas, un tel viol de ligne téléphonique.

On connaît déjà des systèmes de protection de ligne téléphonique. Dans la demande de brevet européen EP-A-0 126 496 il est décrit un appareil qui est du type serrure électronique. Selon ce document, l'appareil comprend une résistance qui vient se brancher en parallèle sur une ligne téléphonique lors du décrochage du poste de l'abonné et un système de mémorisation d'un code qui permet, par une numérotation appropriée, de venir déverrouiller l'ensemble. L'apparition du code correct a pour effet de déconnecter la résistance, ce qui libère la ligne.

Bien que donnant satisfaction à certains égards, de tels appareils présentent des inconvénients notamment en ce qu'ils nécessitent une numérotation supplémentaire de la part de l'abonné. Par ailleurs, ils nécessitent un circuit assez complexe avec reconnaissance d'un code émis.

La présente invention a pour objet un dispositif de structure plus simple.

Selon l'invention le dispositif comprend deux entrées reliées aux deux fils de la ligne téléphonique, un interrupteur d'entrée pouvant être commandé soit manuellement, soit automatiquement par le poste téléphonique d'abonné, un moyen apte à détecter le décrochage d'un combiné sur la ligne, ce dispositif étant caractérisé par le fait qu'il comprend un circuit (25) à une entrée reliée audit moyen de détection (24), ce circuit (25) étant apte à délivrer une suite de signaux de numérotation vers l'autocommutateur, la suite étant choisie de telle sorte qu'elle soit considérée par l'autocommutateur comme une fausse numérotation ou une numérotation interdite, deux sorties reliées aux sorties du circuit, ces sorties étant connectées aux deux fils de la ligne téléphonique, l'apparition d'un signal à la fréquence de décrochage, dû au décrochage du combiné d'un poste intrus qui serait connecté sur la ligne, provoquant l'émission sur la ligne de ladite suite et le blocage de cette ligne et en conséquence l'impossibilité, pour le poste intrus, d'effectuer une numérotation.

Dans un mode de réalisation, le circuit de commande comprend au moins deux générateurs de signaux de fréquences différentes correspondant à un système de numérotation à fréquences vocales et un additionneur relié à ces générateurs.

Dans un autre mode de réalisation, le dispositif comporte en outre une résistance, un interrupteur de sortie disposé en parallèle sur la résistance, cet interrupteur étant commandé par le circuit de commande, et étant relié aux deux sorties du dispositif, l'apparition d'un signal à la fréquence de décrochage, dû au décrochage du combiné d'un poste intrus connecté sur la ligne provoquant la fermeture de l'interrupteur de sortie et, par conséquent, la fermeture de cette ligne sur la résistance.

De toutes façons, les caractéristiques de l'invention apparaîtront mieux à la lecture de la description qui suit, d'un exemple de réalisation donné à titre explicatif et nullement limitatif. Cette description se réfère à des dessins annexés sur lesquels :
    – la figure 1 représente le schéma synoptique du dispositif de l'invention,
    – la figure 2 représente un mode d'installation possible du dispositif,
    – la figure 3 représente un autre mode d'installation du dispositif.

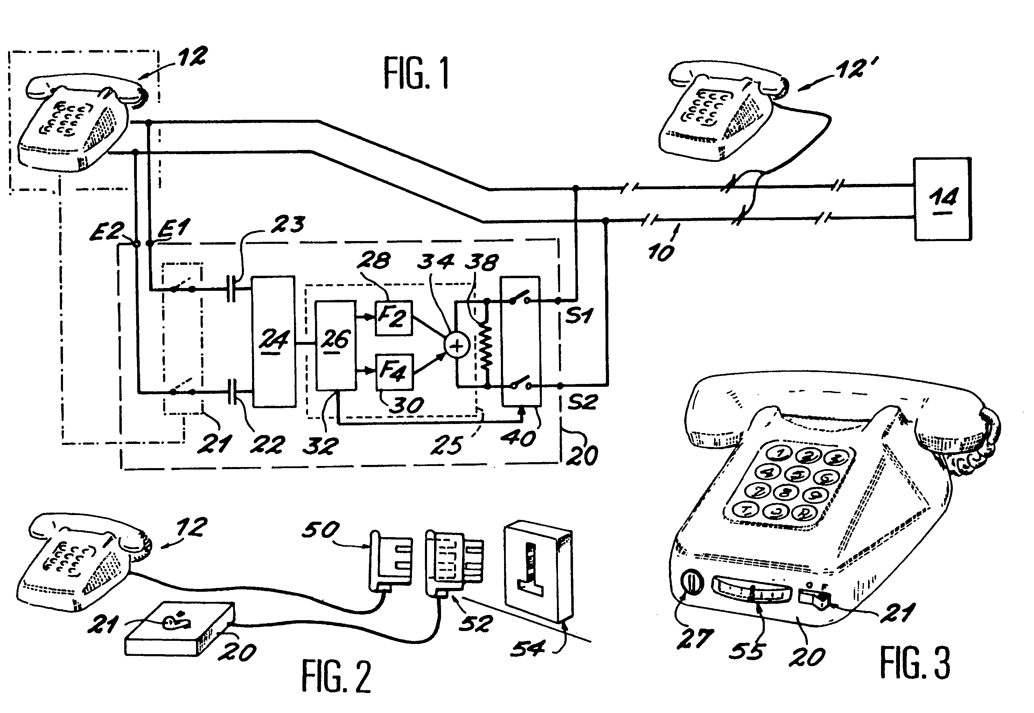

L'installation représentée sur la figure 1 comprend une ligne téléphonique 10 reliée, d'une part, à un poste d'abonné 12 (du type à numérotation par cadran ou à numérotation par signaux à fréquences vocales) et, d'autre part, à un autocommutateur 14. L'installation comprend encore, selon l'invention, un dispositif antiviol 20. Ce dispositif est caractérisé par le fait qu'il comprend deux entrées E1, E2, reliées aux deux fils de la ligne téléphonique 10, un interrupteur d'entrée 21 (pouvant être commandé soit manuellement, soit automatiquement par le poste téléphonique d'abonné), deux condensateurs de découplage 22, 23, un filtre passe-bande 24 centré sur la fréquence de décrochage correspondant à la ligne téléphonique (qui est, en France, de 440 Hz), un circuit de commande 25 qui comprend un monostable 26, relié au filtre 24 et apte à détecter l'apparition du signal de décrochage, et, dans ce cas, à délivrer trois signaux de commande. Le circuit 25 comprend encore deux générateurs 28, 30 travaillant sur les fréquences correspondant à l'émission d'un 0, dans un système de numérotation à fréquences vocales (c'est-à-dire F2=1336 Hz et F4=941 Hz), un additionneur 34 relié à ces deux générateurs. Par ailleurs, une résistance 38 est connectée en parallèle sur l'additionneur, un double interrupteur de sortie 40 est disposé en parallèle sur l'ensemble résistance-additionneur. Cet interrupteur est commandé par l'un des signaux de commande émanant du circuit de commande 25. Par ailleurs, cet interrupteur est relié à deux sorties S1, S2 du dispositif, ces sorties étant connectées aux deux fils de la ligne téléphonique 10.

Sur la figure 1, on a supposé par ailleurs, qu'un poste intrus 12′ était branché sur la ligne, quelque part entre le poste 12 et l'autocommutateur 14.

Le fonctionnement d'un tel dispositif est le suivant. Dès que l'intrus décroche le combiné du poste 12′ un signal à la fréquence de décrochage apparaît sur la ligne. Ce signal est détecté par l'ensemble 24-26, ce qui provoque la fermeture immédiate et maintenue 20 secondes de l'interrupteur de sortie 40. Il s'ensuit, d'une part, l'émission sur la ligne d'une suite de 0 et, d'autre part, la fermeture de cette ligne sur la résistance 38.

On sait que dans le système de numérotation français, l'émission d'un 0 correspond à l'émission simultanée de deux fréquences F2=1336 Hz et F4=941 Hz. Plusieurs 0 peuvent ainsi être émis. L'apparition d'au moins deux 0 (ce qui ne correspond à aucun numéro téléphonique) et la fermeture de la ligne sur une résistance provoquent, dans tous les cas, le blocage de la ligne quel que soit le type de poste d'abonné. Dans le premier cas, en effet (poste à fréquences vocales) les 0 transmis au central feront apparaître le signal d'occupation et dans le second cas, le courant émis par le central se refermera nécessairement par la résistance 38, de sorte qu'il ne sera plus possible de hâcher ce courant selon le processus habituel de numérotation par cadran ou par clavier.

Ce blocage se traduit par l'envoi par l'autocommutateur 14 du signal d'occupation. L'intrus se trouve donc dans l'impossibilité d'effectuer une numérotation avec le poste 12′.

La figure 2 montre une manière d'insérer le dispositif 20 dans une installation téléphonique existante. Au lieu de brancher le conjoncteur 50 directement dans une fiche murale 54, on passe par une fiche intermédiaire 52 qui possède une partie femelle adaptée au conjoncteur 50 et une partie mâle adaptée à la fiche murale. Le dispositif 20 est alors relié à la fiche intermédiaire 52. Dans la variante illustrée, l'interrupteur d'entrée 21 de mise en ou hors service du dispositif est constituée par un levier accessible à l'abonné. Naturellement, lorsque l'abonné veut utiliser sa ligne, il doit mettre hors circuit le dispositif 20, sinon celui-ci lui interdirait la numérotation.

Sur la figure 3, le dispositif 20 est placé dans le poste d'abonné. Ce poste peut comprendre un interrupteur 21 ou un dispositif à clé 27. Ce dernier moyen a l'avantage de permettre le blocage du poste, ce qui interdit son utilisation à toute personne ne possédant pas la clé.

Sur la figure 3, on a représenté également, à titre accessoire, un appareil 55 permettant d'afficher la présence de la tension sur la ligne (48 V). Cet appareil peut être constitué par une ou plusieurs résistances de forte valeur (1 Mégohm par exemple) et un galvanomètre, le tout connecté entre les deux conducteurs de la ligne. Cet appareil permet de vérifier le bon état de la ligne et de mémoriser une éventuelle coupure du 48V.

Naturellement, ce n'est qu'à titre explicatif que, dans le mode de réalisation décrit en liaison avec la figure 1, on a mentionné l'existence de moyens permettant d'émettre une suite de zéros. L'invention couvre de manière plus générale toutes les variantes qui permettent d'envoyer vers l'autocommutateur une suite de chiffres qui est considérée, par l'autocommutateur, comme une fausse numérotation ou une numérotation interdite.

## Revendications

1. Dispositif antiviol de ligne téléphonique, cette ligne (10) étant reliée d'une part à un poste d'abonné (12) du type à numérotation par cadran ou clavier ou du type à numérotation par signaux à fréquences vocales et, d'autre part, à un autocommutateur (14), ce dispositif comprenant deux entrées (E1, E2) reliées aux deux fils de la ligne téléphonique (10), et un moyen (24) apte à détecter le décrochage d'un combiné sur la ligne, ce dispositif étant caractérisé par le fait qu'il comprend un circuit (25) à une entrée reliée audit moyen de détection (24), ce circuit (25) étant apte à délivrer une suite de signaux de numérotation vers l'autocommutateur, la suite étant choisie de telle sorte qu'elle soit considérée par l'autocommutateur comme une fausse numérotation ou une numérotation interdite, deux sorties (S1, S2) reliées aux sorties du circuit (25), ces sorties étant connectées aux deux fils de la ligne téléphonique (10), le décrochage du combiné d'un poste intrus qui serait connecté sur la ligne provoquant l'émission sur la ligne de ladite suite et le blocage de cette ligne et en conséquence l'impossibilité, pour le poste intrus, d'effectuer une numérotation.

2. Dispositif selon la revendication 1, caractérisé par le fait que le circuit de commande (25) comprend au moins deux générateurs (28, 30) de signaux de fréquences différentes correspondant à un système de numérotation à fréquences vocales et un additionneur (34) relié à ces générateurs.

3. Dispositif selon la revendication 1, caractérisé en ce qu'il comporte en outre une résistance (38), un interrupteur de sortie (40) disposé en parallèle sur la résistance, cet interrupteur (40) étant commandé par le circuit de commande (25), et étant relié aux deux sorties (S1, S2) du dispositif, l'apparition d'un signal de décrochage, dû au décrochage du combiné d'un poste intrus connecté sur la ligne provoquant la fermeture de l'interrupteur de sortie (40) et, par conséquent, la fermeture de cette ligne sur la résistance (38).

4. Dispositif selon l'une quelconque des revendications 1 à 3, caractérisé par le fait qu'il est inséré entre le poste d'abonné (12) et une fiche murale (54) par l'intermédiaire d'une fiche intermédiaire (52).

5. Dispositif selon la revendication 1, caractérisé par le fait qu'il est disposé à l'intérieur du poste d'abonné.

## Ansprüche

1. Vorrichtung zur Verhinderung der Verletzung einer Telephonleitung, wobei diese Leitung (10) einerseits mit einem Kundenanschluß (12) des Wähltyps über Wählscheibe oder Tastatur oder des Wähltyps über Signale mit Stimmfrequenzen und andererseits mit einer automatischen Vermittlung (14) verbunden ist, wobei diese Vorrichtung zwei mit den beiden Drähten der Telephonleitung (10) verbundene Eingänge (E1, E2) und eine Einrichtung (24) aufweist, die geeignet ist, das Abnehmen eines Telephonhörers in der Leitung zu detektieren, wobei diese Vorrichtung charakterisiert ist durch die Tatsache, daß sie einen Schaltkreis (25) mit einem mit der Detektionseinrichtung (24) verbundenen Eingang, wobei dieser Schaltkreis (25) geeignet ist, eine Wählsignalfolge an die automatische Vermittlung zu senden, wobei die Folge derart ausgewählt ist, daß sie von der automatischen Vermittlung als falsche oder verbotene Wählung betrachtet wird, und zwei Ausgänge (S1, S2) umfaßt, die mit den Ausgängen des Schaltkreises (25) verbunden sind, wobei diese Ausgänge mit den beiden Drähten der Telephonleitung (10) verbunden sind, wobei das Abnehmen eines Telephonhörers eines eindringenden Apparats, der mit der Leitung verbunden wäre, das Aussenden der Folge, das Blockieren der Leitung und schließlich die Unmöglichkeit für den eindringenden Apparat, einen Wählvorgang durchzuführen, bewirkt.

2. Vorrichtung nach Anspruch 1, gekennzeichnet durch die Tatsache, daß der Steuerschaltkreis (25) wenigstens zwei Signalgeneratoren (28, 30) unterschiedlicher Frequenzen, die einem System mit Wählvorgang mit Vokalfrequenzen entsprechen, und einen mit diesen Generatoren verbundenen Addierer (34) umfassen.

3. Vorrichtung nach Anspruch 1, dadurch gekennzeichnet, daß sie außerdem einen Widerstand (38) und einen parallel zum Widerstand angeordneten Ausgangsschalter (40) umfaßt, wobei dieser Schalter vom Steuerschaltkreis (25) gesteuert wird und mit den beiden Ausgängen (S1, S2) der Vorrichtung verbunden ist, wobei das Erscheinen eines Abnehmsignals aufgrund des Abnehmen eines Telephonhörers eines eindringenden, mit der Leitung verbundenen Apparats das Schließen dieser Leitung über den Widerstand (38) verursacht.

4. Vorrichtung nach einem der Ansprüche 1 bis 3, gekennzeichnet durch die Tatsache, daß sie zwischen einem Kundengerät (12) und einem Wandstecker (54) über einen Zwischenstecker (52) eingesetzt ist.

5. Vorrichtung nach Anspruch 1, gekennzeichnet durch die Tatsache, daß sie im Innern eines Kundengeräts angeordnet ist.

## Claims

1. Device for preventing violation of a telephone line, this line (10) being connected on the one hand to a subscriber's station (12) of the type with dialling by means of a dial or keys or of the type with dialling by means of vocal-frequency signals and, on the other hand, to a unit automatic exchange (14), this device comprising two inputs (E1, E2) connected to the two wires of the telephone line (10) and a means (24) suitable for detecting the lifting of a handset on the line, this device being characterized in that it comprises a circuit (25) having one input connected to the said detection means (24), this circuit (25) being suitable for supplying a series of dialling signals to the unit automatic exchange, the series being chosen such that it is considered by the unit automatic exchange to be an incorrect or a prohibited dialling sequence, two outputs (S1, S2) connected to the outputs of the circuit (25), these outputs being connected to the two wires of the telephone line (10), lifting of the handset of an intruding station connected on the line producing tranmission of the said sequence on the line and blocking of this line and consequently preventing the intruding station from dialling.

2. Device according to Claim 1, characterized in that the control circuit (25) comprises at least two generators (28, 30) of signals having different frequencies, corresponding to a vocal-frequency dialling system, and an adder (34) connected to these generators.

3. Device according to Claim 1, characterized in that it further has a resistor (38), an output circuit breaker (40) arranged in parallel with the resistor, this circuit breaker (40) being controlled by the control circuit (25) and being connected to the two outputs (S1, S2) of the device, the appearance of a lifting signal brought about by the lifting of the handset of an intruding station connected on the line causing the output circuit breaker (40) and consequently this line on the resistor (38) to be closed.

4. Device according to any of Claims 1 to 3, characterized in that it is inserted between the subscriber's station (12) and a wall socket (54) by way of an adapter plug (52).

5. Device according to Claim 1, characterized in that it is arranged within the subscriber's station.

FIG. 1

FIG. 2

FIG. 3

EP 0 239 455 B1